# EUROPÄISCHE PATENTSCHRIFT

(11) **EP 0 644 101 B1**
(45) Veröffentlichungstag und Bekanntmachung des Hinweises auf die Patenterteilung: **23.10.1996**
(21) Anmeldenummer: 94113580.8
(22) Anmeldetag: 31.08.1994
(51) Int. Cl.: B62D 5/083

(54) **Lenkventil mit geschlossener Mitte**
Steering valve with closed center
Valve de braquage avec centre fermé

(30) Priorität: 07.09.1993 DE 4330159
(43) Veröffentlichungstag der Anmeldung: 22.03.1995
(73) Patentinhaber: TRW Fahrwerksysteme GmbH & Co. KG, D-40547 Düsseldorf (DE)
(72) Erfinder: Spillner, Robert Dipl.-Ing., D-40589 Düsseldorf (DE); Vile, David, D-41366 Schwalmtal (DE); Pritchard, Geoffrey, Wrington, Bristol BS18 7PR (GB)
(74) Vertreter: Stenger, Watzke & Ring Patentanwälte

(56) Entgegenhaltungen:
- EP-A- 0 468 659
- GB-A- 2 188 888

## Beschreibung

Die Erfindung betrifft ein Lenkventil mit geschlossener Mitte zur Versorgung eines Stellgliedes mit Hydraulikdruck, bestehend aus einer Eingangswelle, einer Ausgangswelle, einem Torsionsstab, der mit einem Ende mit der Eingangswelle und dem anderen Ende mit der Ausgangswelle verbunden ist, und einer die Eingangswelle umgebenden Ventilhülse.

Lenkventile der gattungsgemäßen Art werden insbesondere in Servolenksystemen eingesetzt. Der Aufbau derartiger Servolenksysteme ist an sich bekannt. Eine mit einer Lenkstange verbundene Eingangswelle ist über einen Torsionsstab mit einer mit einem Ritzel versehenen Ausgangswelle verbunden. Das Ritzel wirkt auf die Zahnstange einer Lenkung. Für derartige Lenksysteme ist die Verwendung von Lenkventilen bekannt. Dazu ist in bekannter Weise eine Ventilhülse vorgesehen, welche mit der Ausgangswelle in Eingriff steht und die Eingangswelle umgibt. Von einer Pumpe wird Hydraulikflüssigkeit unter Druck durch das System gepumpt. Bei einer relativen Verdrehung der Eingangswelle zur Ventilhülse wird Hydraulikdruck einem Hydraulikmotor zugeführt, welcher die Zahnstangenbewegung in eine der beiden möglichen Richtungen unterstützt.

Ein in Servolenksystemen eingesetzter Typ von Lenkventilen ist das Lenkventil mit sogenannter offener Mitte. In Neutralstellung des Lenkventils mit offener Mitte wird von der Pumpe Hydraulikflüssigkeit mit einem niedrigen Druck durch das offene Ventil in ein Reservoir gepumpt. Eine relative Verdrehung der Eingangswelle zur Ventilhülse bewirkt die Erhöhung des Druckes, welcher dann dem Servomotor zugeführt wird. Der Nachteil von Lenkventilen mit offener Mitte ist, daß auch in Neutralstellung ein ständiger Hydraulikfluß aufrechterhalten werden muß. Es ist somit eine Verlustleistung vom Antriebsmotor zu erbringen, die sich aus dem Staudruck und dem Volumenstrom herleitet.

Demgegenüber werden auch Lenkventile mit sogenannter geschlossener Mitte eingesetzt. Durch die geschlossene Mittelstellung ist der Hydraulikfluß zu den beiden Zylinderseiten in Neutralstellung des Lenkventils unterbrochen. Damit findet in Neutralstellung auch kein Hydraulikfluß statt. Von einer Pumpe wird ein Betriebsdruck an das praktisch geschlossene Ventil angelegt, welcher bei Ventilöffnung von der dann in Betrieb genommenen Pumpe lediglich aufrechterhalten werden muß. Die geschlossene Mittelstellung wird durch eine positive Überdeckung der Steuerkanten realisiert, während bei Lenkventilen mit offener Mitte die Steuerkantenüberdeckung negativ ist.

Wegen der auch bei Nichtbetätigung der Lenkung mit Lenkventilen mit offener Mitte auftretenden Verlustleistung sind bei Betrachtung der Leistung die Lenkventile mit geschlossener Mitte überlegen.

Ein Problem bei Lenkventilen mit geschlossener Mitte besteht darin, daß praktisch keine direkte Zuordnung zwischen einem Eingangsmoment und einem Arbeitsdruck im Zylinder stattfindet. Bei einer beliebigen Verdrehung der Eingangswelle und damit einer beliebigen Öffnung des Lenkventils wird der Arbeitsdruck im Zylinder praktisch bis zum Druckausgleich im Hydrauliksystem aufgebaut. Der Bedienperson steht somit keine Rückmeldung zur Verfügung, welche er als Maß für die Kräfte im Stellglied hernehmen kann. Um dieses Problem zu lösen, ist es bekannt, sogenannte Sitzventile in Lenkventilen mit geschlossener Mitte einzusetzen. Diese Sitzventile sind in der Neutralstellung des Lenkventils geschlossen, so daß hydraulikseitig keine Umlaufverluste eintreten. Bei einer relativen Verdrehung von Eingangswelle und Steuerhülse, wird ein Einlaßsitzventil durch mechanischen Anschlag aufgestoßen. In der Regel wird der mechanische Anschlag mit einem Ansprechspiel versehen, so daß nach Aufbrauch des Ansprechspiels die Verbindung von der Betätigungseinrichtung zum Ventil plötzlich starr wird und das Ventil schlagartig öffnet. Dadurch schießt plötzlich und in zu hohem Maß Druckflüssigkeit in den jeweiligen Druckraum des Hydraulikmotors. Daraus resultiert eine Unstetigkeit im Anlenkvorgang, die bei derartigen Lenkventilen bisher nicht beseitigt werden konnte.

Bei einem aus der DE 28 34 421 A1 bekannten, gattungsgemäßen Lenkventil ist ein federbelastetes Sitzventil eingesetzt, welches das Problem der Unstetigkeit im Anlenkvorgang dadurch löst, daß die Handkraft auf eine Ventilschließfeder und nicht auf den Ventilkörper einwirkt.

Lenkventile mit geschlossener Mitte sind jedoch durch die notwendige Verwendung von Sitzventilen nicht unproblematisch. Die Sitzventile unterliegen einem gewissen Verschleiß, so daß mit zunehmender Betriebsdauer das Servoventil keine innere Leckagefreiheit garantieren kann. Die Sitzventile stellen für sich Bauteilgruppen mit engen Toleranzforderungen dar, die mit zusätzlichem und großem Fertigungsaufwand hergestellt und in das Lenkventil, und zwar zwischen Eingangswelle und Ventilhülse, eingesetzt werden müssen. Durch die Möglichkeit der mechanischen Einwirkung und der Verschmutzung der Sitzventile stellen diese ein Sicherheitsrisiko dar. Darüber hinaus kann das Servoventil nicht nachgestellt werden, da die entsprechenden Bauteile sich im Inneren befinden. Schließlich wirken sich die Sitzventile auf das Betriebsgefühl der Bedienperson negativ aus. Zum einen verspürt die Bedienperson einen Totweg, da sie Kraft einleiten muß, bis die Schließfederkraft überdrückt ist, ohne daß sich an der Lenkung eine Wirkung zeigt. Zum anderen wird das nach Überwinden des Schwellmomentes stattfindende Öffnen des Ventils für die Bedienperson spürbar.

Davon ausgehend liegt der Erfindung die **Aufgabe** zugrunde, ein Lenkventil der gattungsgemäßen Art dahingehend weiterzubilden, daß es wirtschaftlicher und einfacher hergestellt und montiert werden kann, daß es störunanfällig ist, daß es sich durch einen relativ kleinen Totweg auszeichnet, und der Bedienperson eine Beziehung zwischen der einzugebenden Lenkkraft und dem resultierenden Hydraulikdruck bereitstellt.

Als technische **Lösung** dieser Aufgabe wird ein gattungsgemäßes Lenkventil bereitgestellt, bei dem die Ventilhülse mit der Ausgangswelle derart verbunden ist, daß sie um eine Grundposition in einem Winkelbereich in beiden Richtungen relativ zur Ausgangswelle um die gemeinsame Achse gegen eine Rückstellkraft verdrehbar ist, und daß an dem Lenkventil ein Stellelement angeordnet ist, welches auf die Ventilhülse ein zur Drehung der Eingangswelle gleichsinnig wirkendes Drehmoment ausübt, welches in einem proportionalen Verhältnis zum im Stellglied wirkenden Druck steht.

Durch die Verdrehbarkeit der Ventilhülse relativ zur Ausgangswelle in einem bestimmten Winkelbereich in beiden Richtungen um eine Grundposition ist es möglich, das Lenkventil bei einem beliebigen relativen Winkel zwischen Eingangswelle und Ventilhülse zu schließen. Dadurch kann das Ventil geschlossen werden, bevor ein Ausgleich im hydraulischen Drucksystem stattgefunden hat, d.h. bevor der maximale Hydraulikdruck des Systems am Stellglied anliegt. Durch die Verwendung eines auf die Ventilhülse wirkenden Stellelementes kann nun der Zeitpunkt des Schließens in Abhängigkeit von Kraftverhältnissen gewählt werden. Durch die Ausgestaltung des Stellelementes wird der Zeitpunkt nahezu beliebig einstellbar. Da eine Beziehung zwischen der von der Bedienperson aufgebrachten Eingangskraft und den resultierenden, am Stellglied wirkenden Druckverhältnissen gewünscht wird, kann das Stellelement auf diese Verhältnise eingestellt werden. Bei Erreichen des vorgegebenen Verhältnisses übt das Stellelement auf die Ventilhülse eine Kraft aus, so daß diese gleichsinnig zur Eingangswellendrehung relativ zur Ausgangswelle verdreht wird. Das Lenkventil wird damit wieder geschlossen.

Unter Stellelement wird somit im Sinne der vorliegenden Erfindung die Einheit aus dem eine Kraft ausübenden Bestandteil und dem die Kraftverhältnisse, die zwischen der Eingangskraft und der aus dem wirkenden Druck resultierenden Kraft bestehen, wahrnehmenden Bestandteil verstanden. Das Stellelement kann somit ohne weiteres aus einer Mehrzahl von die angegebenen Funktionen ausführenden Bauteilen aufgebaut sein. Wichtig ist für die erfindungsgemäße Ausgestaltung, daß die Ventilhülse relativ zur Ausgangswelle in einem Winkelbereich verdrehbar ist, und daß die wirkenden Kraftverhältnisse wahrgenommen und mit einem bestimmten Verhältnis auf die Ventilhülse eine Verdrehkraft ausgeübt wird.

In vorteilhafter Weise wird angegeben, daß die Verbindung zwischen Ausgangswelle und Ventilhülse zur Erzeugung der Rückstellkraft eine Feder aufweist. In besonders vorteilhafter Weise wird zu diesem Zweck eine C-Feder eingesetzt, welche in entsprechenden Nuten der Bauteile über den größten Teil des Umfangs der Verbindung zwischen Ventilhülse und Ausgangswelle angeordnet ist und durch entsprechende Nocken an den Bauteilen bei Verdrehung beaufschlagt wird. Mit Vorteil wird weiterhin angegeben, daß das Stellelement ein zwischen der Eingangswelle und der Ventilhülse angeordneter Reaktionskolben ist, der einerseits mit der auf die Eingangswelle wirkenden Relativverdrehung gekoppelt ist, andererseits mit der aus dem vom Stellglied rückgeführten Hydraulikdruck resultierenden Kraft beaufschlagt wird, und der mit der Ventilhülse derart verbunden ist, daß er auf diese ein Drehmoment ausübt, sobald auf der Oberseite des Reaktionskolbens die aus dem Hydraulikdruck des Stellgliedes resultierende Kraft anliegt. Der besondere Vorteil der Verwendung des Reaktionskolbens besteht darin, daß dieser ein in dem erfindungsgemäßen Lenkventil integrierbares Bauelement ist. In einem Bauteil wird der die Ventilhülse verstellende Anteil und der die Kraftverhältnisse wahrnehmende Anteil integriert, wodurch das erfindungsgemäße Lenkventil bezüglich Herstellung, Montage, Einstellung und Wartung vereinfacht wird.

Mit Vorteil wird angegeben, daß die Verbindung zwischen Reaktionskolben und Ventilhülse dadurch gebildet wird, daß die Ventilhülse und der Reaktionskolben jeweils eine schräge Abrollfläche aufweisen, und daß zwischen Reaktionskolben und Ventilhülse wenigstens eine Kugel eingesetzt ist. Durch diese technische Realisierung wird Rotationsbewegung in translatorische Bewegung umgesetzt, und umgekehrt. Ausgehend von der Neutralstellung bewirkt eine Verdrehung der Eingangswelle eine Verdrehung des Reaktionskolbens, welcher sich aufgrund des Ablaufes der Kugel auf der schrägen Ebene anhebt. Der Reaktionskolben ist zweckmäßigerweise gegen diese Hubbewegung federbelastet. Weiterhin bewirkt die Verdrehung der Eingangswelle ein Öffnen des Ventils, so daß der Hydraulikdruck bis an das Stellglied des Fahrwerks weitergeleitet wird. Von der jeweils beaufschlagten Kammer des Stellgliedes wird der Hydraulikdruck auf die andere Seite des Reaktionskolbens zurückgeführt und übt dort eine der Eingangskraft entgegenwirkende Kraft aus. Wird diese aus dem Hydraulikdruck resultierende Kraft größer als die Schließkraft des Federelementes zwischen Steuerhülse und Ausgangswelle, so wird der Reaktionskolben wieder in Richtung Ventilhülse gedrückt. Da er relativ zur Eingangswelle nicht verdrehbar ist, übt die translatorische Bewegung des Reaktionskolbens in Richtung Ventilhülse auf die Ventilhülse ein Drehmoment aus, welches aufgrund der schrägen Ebene und der Kugelverbindung zu der Drehung der Eingangswelle gleichsinnig ist. Aufgrund der Verdrehbarkeit der Ventilhülse zur Ausgangswelle kann sich die Ventilhülse nun verdrehen und wird somit praktisch der Eingangswelle nachgestellt. Bei Erreichen eines entsprechenden Druckes ist das Lenkventil wieder geschlossen. Damit wird eine Beziehung zwischen der Eingangskraft und dem auf das Stellglied wirkenden Druck hergestellt. Andererseits erfährt die Bedienperson eine spürbare Kraftrückmeldung.

Mit Vorteil wird angegeben, daß das Hydrauliksystem ein Absperrventil aufweist, welches bei Neutralstellung des Lenkventils dieses von der Pumpe bzw. einem Druckspeicher absperrt, und welches geöffnet wird, sobald der Relativwinkel zwischen Eingangswelle und Ventilhülse einen bestimmten, einstellbaren Wert überschreitet. Mit Vorteil wird angegeben, daß am Ventilgehäuse im Bereich des Reaktionskolbens ein Näherungssensor angeordnet ist, welcher das Absperrventil öffnet, sobald sich der Reaktionskolben relativ zur Ventilhülse axial von dieser wegbewegt. Mit Vorteil wird angegeben, daß es sich beim Näherungssensor um einen induktiven Sensor handelt.

Das erfindungsgemäße Lenkventil vermindert sämtliche Totwege bzw. Schwellmomente, da durch die Einleitung der Kraft auf die Eingangswelle keine Ventile geöffnet bzw. geschlossen werden müssen. Weiterhin wird der Bauteilebedarf verringert. Schließlich werden die mit den Sitzventilen verbundenen Nachteile wie Verschleiß, Sicherheitsrisiko, negatives Gefühl und dgl. vollständig ausgeräumt, da zwischen Eingangswelle und Ventilhülse keine Sitzventile mehr eingesetzt werden müssen. Durch die Möglichkeit, auf die Bauteile zwischen Eingangswelle und Ventilhülse zu verzichten, wird der Herstellungs- und Montageaufwand erheblich verringert und das Servoventil insgesamt in Herstellung, Einsatz und Wartung wirtschaftlicher und einfacher.

Weitere Vorteile und Merkmale der Erfindung ergeben sich aus der folgenden Beschreibung anhand der Figuren. Dabei zeigen:
- Fig. 1: eine schematische Schnittansicht eines Lenkventils und seiner Anordnung in einem Servolenksystem mit einer schematischen Schnittansicht durch die montierte Ventilhülse;
- Fig. 2: eine vergrößerte und vervollständigte Schnittansicht des Lenkventils gemäß Fig. 1; und
- Fig. 3: einen Hydraulikschaltplan für das Servolenksystem.

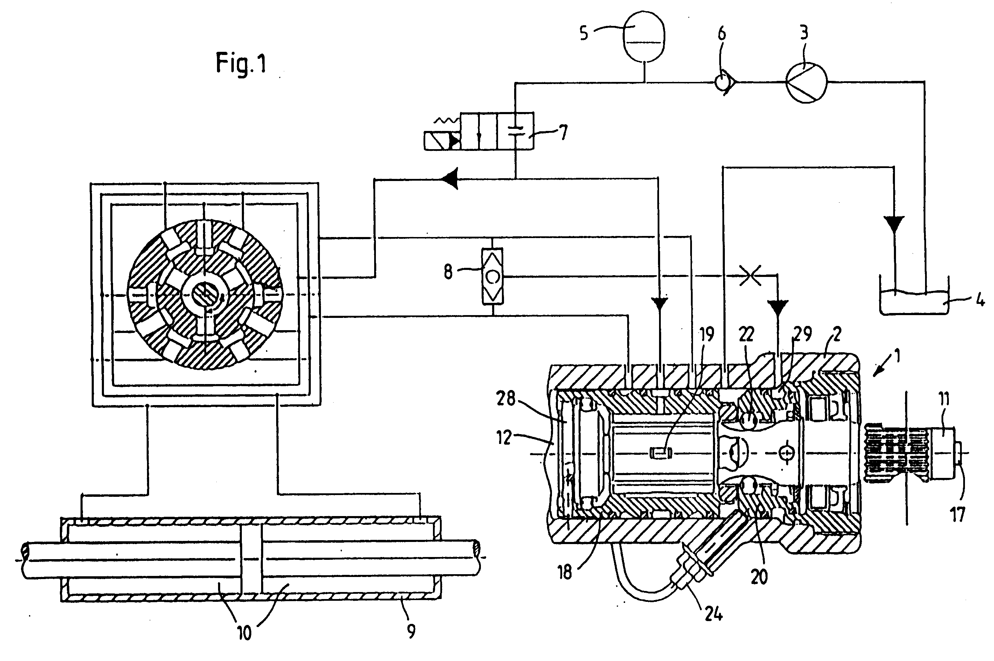

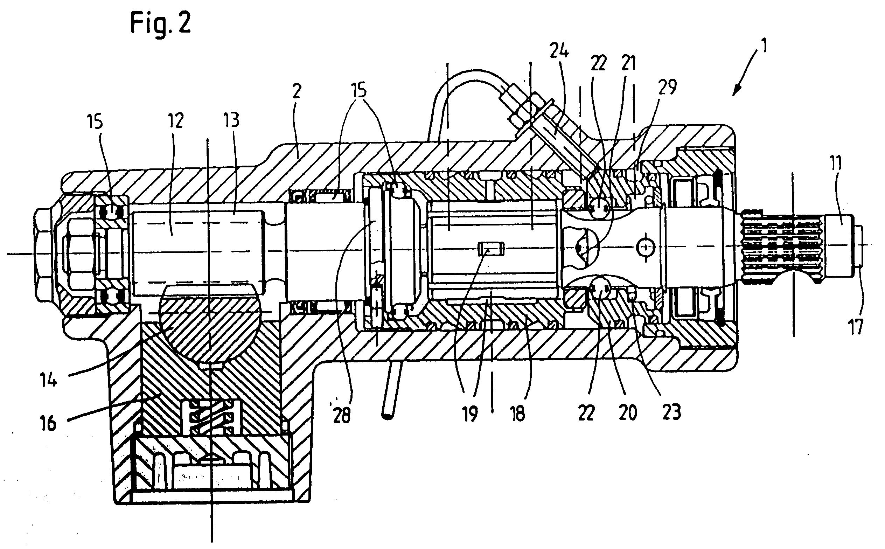

Wie in Fig. 1 und 2 zu sehen ist das erfindungsgemäße Lenkventil 1 in einem Lenkgehäuse 2 angeordnet und mit einem Hydrauliksystem verbunden. Von einer Pumpe 3 wird die Hydraulikflüssigkeit, die in einem Tank 4 bereitgestellt ist, mit Druck beaufschlagt. Das Hydrauliksystem weist in bekannter Weise einen Druckspeicher 5 auf. Zwischen Druckspeicher 5 und Pumpe 3 ist ein Rückschlagventil 6 angeordnet. Ein Absperrventil 7 kann den Druckbereich des Hydrauliksystems vom Lenkventil absperren bzw. beide miteinander verbinden. Mit dem Lenkventil 1 wird ein Hydraulikmotor 9 mit Hydraulikdruck versorgt, indem der Hydraulikdruck einer der beiden Kammern 10 zugeleitet wird, während die andere Kammer zum Tank 4 hin geöffnet wird. Ein Wechselventil 8 sorgt für eine Rückführung des an der jeweiligen Kammer 10 anliegenden Hydraulikdrucks zum Lenkventil 1.

Im folgenden werden die Bauteile des Lenkventils 1 beschrieben, wobei auf Fig. 1, insbesondere aber auch auf Fig. 2 Bezug genommen wird. Das erfindungsgemäße Lenkventil 1 ist im Lenkgehäuse 2 eingebaut und umfaßt eine Eingangswelle 11, welche mit einer nicht gezeigten Lenkradwelle in Verbindung steht. Weiterhin umfaßt das Lenkventil eine Ausgangswelle 12, welche über ein Ritzel 13 mit einer Zahnstange 14 einer Lenkung in Verbindung steht. An entsprechenden Stellen sind Lager 15 angeordnet. Druckstücke 16 sorgen für eine spielfreie Verbindung zwischen Ritzel 13 und Zahnstange 14.

Die Eingangswelle 11 und die Ausgangswelle 12 sind mittels eines Torsionsstabes 17 miteinander verbunden. Aufgrund der Federsteifigkeit des Torsionsstabes 17 ist die Eingangswelle 11 relativ zur Ausgangswelle 12 verdrehbar. Weiterhin wird die Eingangswelle 11 von einer Ventilhülse 18 umgeben. Eingangswelle 11 und Ventilhülse 18 bilden das Lenkventil durch die Ventilöffnungen 19, deren Steuerkanten sich positiv überdecken. Im Eingangsbereich des Lenkventils 1 ist ein Reaktionskolben 20 angeordnet, der mit einer Abrollfläche 21 über Kugeln 22, belastet durch die Feder 23, gegen die Ventilhülse 18 anliegt. An der Eingangswelle ist der Reaktionskolben axial verschieblich, jedoch nicht verdrehbar gelagert. Ein Näherungssensor 24 ist im unteren Bereich des Reaktionskolbens am Lenkgehäuse 2 angeordnet.

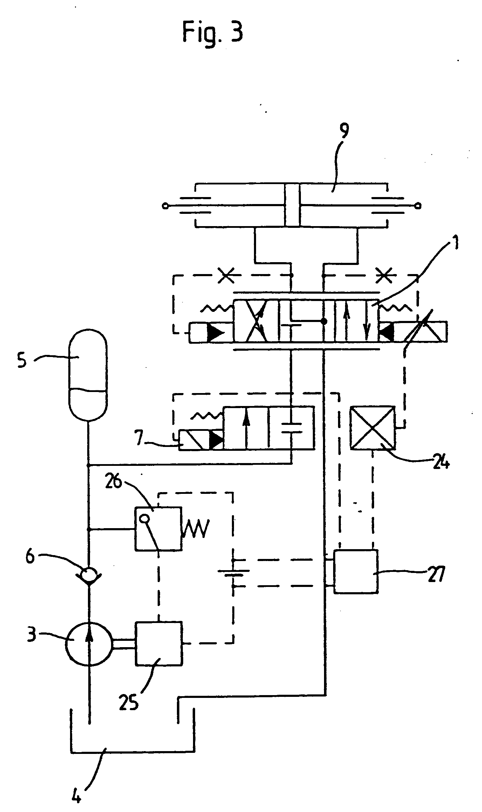

Fig. 3 zeigt die hydraulische und elektrische Verschaltung des Systems. Die in einem Tank 4 bereitgehaltene Hydraulikflüssigkeit wird durch eine Pumpe 3 auf Betriebsdruck gebracht. Ein Druckspeicher 5 dient als Druckreservoir. Zwischen Druckspeicher 5 und Pumpe 3 ist ein Rückschlagventil 6 angeordnet. Die Pumpe 3 wird über einen Elektromotor angetrieben, der von einem Druckschalter 26 beschaltet wird. Zur Steuerung des Systems dient die Steuerung 27. Die Steuerung 27 sorgt für das Öffnen des Absperrventils 7, beispielsweise aufgrund eines Signals des Näherungssensors 24, so daß über das Lenkventil 1 der Hydraulikmotor 9 an der entsprechenden Kammer mit Druck beaufschlagt wird. Dies geschieht durch Verdrehung der Eingangswelle 11 relativ zur Ventilhülse 18, wodurch das Lenkventil 1 geöffnet ist. Wie in Fig. 1 und 2 zu sehen, ist die Ventilhülse 18 relativ zur Ausgangswelle 12 verdrehbar angeordnet, wobei die Rückstellkraft durch eine C-Feder 28 aufgebracht wird, welche in entsprechende Nuten der Ausgangswelle 12 bzw. der Ventilhülse 18 eingesetzt ist.

Unter Bezug auf alle Figuren wird im folgenden die Funktion des erfindungsgemäßen Lenkventils beschrieben. Ausgehend von der Neutralstellung bewirkt ein auf die Eingangswelle wirkendes Lenkmoment, daß die Eingangswelle 11 aufgrund des Torsionsstabes 17 relativ zur Ausgangswelle 12 und damit relativ zur Ventilhülse 18 um einen Winkel verdreht wird. Diese Verdrehung bewirkt, daß der mit der Eingangswelle 11 mitdrehende Reaktionskolben 20 aufgrund der schrägen Abrollfläche 21 und der Verbindung zur Ventilhülse 18 über die Kugeln 22 um einen Weg von der Ventilhülse 18 abgehoben wird. Der Näherungssensor 24 stellt dieses Abheben fest und gibt ein Signal an die Steuerung 27, welche das Absperrventil 7 öffnet. Hydraulikdruck wird somit dem Lenkventil zugeleitet, und aufgrund der zueinander verschobenen Steuerkanten der Ventilöffnungen 19 der jeweiligen Kammer 10 des Hydraulikmotors 9 zugeführt. Der an der beaufschlagten Kammer 10 anstehende Hydraulikdruck wird über das Wechselventil 8 auf die Rückseite 29 des Reaktionskolbens zurückgeführt. Der zurückgeführte Druck bewirkt, daß die Ventilhülse gegen die Federkraft relativ zur Ausgangswelle verdreht und der Eingangswelle nachgeführt wird. Diese Funktion wird dadurch bewirkt, daß der auf der Rückseite 29 des Reaktionskolbens 20 anstehende Hydraulikdruck gegen die Schließkraft der C-Feder arbeitet. Übersteigt die aus dem rückgeführten Hydraulikdruck resultierende Kraft, welche über die abgeschrägte Abrollfläche auf die Steuerhülse wirkt die Schließkraft der C-Feder, so wird der Reaktionskolben wieder in Richtung Ventilhülse zurückgedrückt. Da der Reaktionskolben 20 relativ zur Eingangswelle 11 nur axial beweglich ist, jedoch relativ zu dieser nicht verdreht werden kann, wird über die abgeschrägte Abrollfläche 21 und die Kugeln 22 bewirkt, daß auf die Ventilhülse 18 ein Drehmoment ausgeübt wird. Dieses Drehmoment wirkt in der gleichen Drehrichtung, in der auch die Eingangswelle verdreht wurde. Aufgrund der federbelasteten aber verdrehbaren Verbindung zwischen Ventilhülse 18 und Ausgangswelle 12 kann die Ventilhülse nun gegen die Kraft der C-Feder 28 relativ zur Ausgangswelle 12 verdreht und somit der Eingangswelle nachgeführt werden.

Das Lenkventil 1 ist wieder geschlossen, der Reaktionskolben 20 liegt wieder an der Ventilhülse 18 an, so daß aufgrund der Meldung des Näherungssensors 24 das Absperrventil 7 wieder geschlossen wird.

Das gezeigte Ausführungsbeispiel zeigt ein Bauteil, nämlich den Reaktionskolben 20, welcher als Stellelement zur Verdrehung der Ventilhülse in Abhängigkeit von den herrschenden Kraftverhältnissen eingesetzt ist. Dieses eine Bauteil ist also gleichzeitig Kraftsensor und Verstellelement. Auf Sitzventile kann vollends verzichtet werden, so daß sich die beschriebenen Vorteile ergeben.

### Bezugszeichenliste:

- 1: Lenkventil
- 2: Lenkgehäuse
- 3: Pumpe
- 4: Tank
- 5: Druckspeicher
- 6: Rückschlagventil
- 7: Absperrventil
- 8: Wechselventil
- 9: Stellglied
- 10: Kammern
- 11: Eingangswelle
- 12: Ausgangswelle
- 13: Ritzel
- 14: Zahnstange
- 15: Lager
- 16: Druckstück
- 17: Torsionsstab
- 18: Ventilhülse
- 19: Steuerkanten
- 20: Reaktionskolben
- 21: Abrollfläche
- 22: Kugel
- 23: Feder
- 24: Näherungssensor
- 25: Elektromotor
- 26: Druckschalter
- 27: Steuerung
- 28: Federelement
- 29: Reaktionskolben

## Patentansprüche

1. Lenkventil mit geschlossener Mitte zur Versorgung eines Stellgliedes mit Hydraulikdruck, bestehend aus einer Eingangswelle (11), einer Ausgangswelle (12), einem Torsionsstab (17), der mit einem Ende mit der Eingangswelle und dem anderen Ende mit der Ausgangswelle verbunden ist, und einer die Eingangswelle umgebenden Ventilhülse (18),
**dadurch gekennzeichnet,**
daß die Ventilhülse (18) mit der Ausgangswelle (12) derart verbunden ist, daß sie um eine Grundposition in einem Winkelbereich in beiden Richtungen relativ zur Ausgangswelle (12) um die gemeinsame Achse gegen eine Rückstellkraft verdrehbar ist, und daß an dem Lenkventil (1) ein Stellelement (20) angeordnet ist, welches auf die Ventilhülse (18) ein zur Drehung der Eingangswelle (11) gleichsinnig wirkendes Drehmoment ausübt, welches in einem proportionalen Verhältnis zum im Stellglied wirkenden Druck steht.

2. Lenkventil nach Anspruch 1, dadurch gekennzeichnet, daß die Verbindung zwischen Ventilhülse (18) und Ausgangswelle (12) zur Erzeugung der Rückstellkraft eine Feder aufweist.

3. Lenkventil nach Anspruch 2, dadurch gekennzeichnet, daß die Feder eine C-Feder (28) ist.

4. Lenkventil nach einem der vorhergehenden Ansprüche, dadurch gekennzeichnet, daß das Stellelement ein Reaktionskolben (20) ist, welcher axial beweglich relativ zur Eingangswelle (11), und axial und drehbeweglich relativ zur Ventilhülse (18) angeordnet ist und auf die Ventilhülse (18) bei Annäherung an diese ein Drehmoment ausübt.

5. Lenkventil nach Anspruch 4, dadurch gekennzeichnet, daß der Reaktionskolben (20) über eine schräge Abrollfläche (21) und Kugeln (22) mit der Ventilhülse (18) in Verbindung steht.

6. Lenkventil nach einem der vorhergehenden Ansprüche, dadurch gekennzeichnet, daß in der Hydraulikzuleitung ein Absperrventil angeordnet ist.

7. Lenkventil nach Anspruch 6, dadurch gekennzeichnet, daß das Absperrventil (7) aufgrund eines Signals eines am Lenkventil (1) angeordneten Näherungssensor (24) für die Bewegung des Reaktionskolbens (20) geschaltet ist.

8. Lenkventil nach Anspruch 7, dadurch gekennzeichnet, daß der Näherungssensor (24) ein induktiver Näherungssensor ist.

## Claims

1. A steering valve having a closed centre for supplying an adjusting member with hydraulic pressure, comprising an input shaft (11), an output shaft (12), a torsion rod (17), which is connected at one end to the input shaft and at the other end to the output shaft, and a valve sleeve (18) enclosing the input shaft, characterised in that the valve sleeve (18) is connected to the output shaft (12) in such a manner that it can be rotated against a restoring force relative to the output shaft (12) about the common axis through an angular range in both directions from a basic position, and an adjusting member (20) is arranged on the steering valve (1) and exerts a torque upon the valve sleeve (18) acting in the same direction as the rotation of the input shaft (11), the torque being proportional to the pressure existing in the adjusting member.

2. A steering valve according to claim 1, characterised in that the connection between the valve sleeve (18) and the output shaft (12) comprises a spring for generating the restoring force.

3. A steering valve according to claim 2, characterised in that the spring is a C-spring (28).

4. A steering valve according to one of the preceding claims, characterised in that the adjusting element is a reaction piston (20), which is arranged so as to be axially displaceable relative to the input shaft (11) and axially and rotationally displaceable relative to the valve sleeve (18), and exerts a torque upon the valve sleeve (18) when it approaches said valve sleeve.

5. A steering valve according to claim 4, characterised in that the reaction piston (20) is connected to the valve sleeve (18) via an inclined rolling surface (21) and balls (22).

6. A steering valve according to one of the preceding claims, characterised in that a cut-off valve is arranged in the hydraulic supply line.

7. A steering valve according to claim 6, characterised in that the cut-off valve (7) is switched for the movement of the reaction piston (20) as a result of a signal from a proximity sensor (24) arranged on the steering valve (1).

8. A steering valve according to claim 7, characterised in that the proximity sensor (24) is an inductive proximity sensor.

## Revendications

1. Vanne de direction avec centre fermé servant à alimenter un organe de réglage en fluide hydraulique sous pression, consistant en un arbre d'entrée (11), un arbre de sortie (12), une barre de torsion (17), qui est reliée par une extrémité à l'arbre d'entrée et par l'autre extrémité à l'arbre de sortie, et en un manchon de vanne (18) qui entoure l'arbre d'entrée, vanne de direction caractérisée en ce que le manchon de la vanne (18) est relié à l'arbre de sortie (12) d'une manière telle qu'il peut tourner autour d'une position de base, dans les deux sens, dans une certaine zone angulaire, par rapport à l'arbre de sortie (12) autour de l'axe commun à l'encontre d'une force de rappel, et en ce que l'on dispose sur la vanne de direction (1) un élément de réglage (20), qui exerce sur le manchon de la vanne (18) un couple de rotation qui agit dans le même sens par rapport à la rotation de l'arbre d'entrée (11), couple de rotation qui est dans un rapport proportionnel à la pression qui agit dans l'organe de réglage.

2. Vanne de direction selon la revendication 1, caractérisée en ce que la liaison entre le manchon de la vanne (18) et l'arbre de sortie (12), qui sert à produire la force de rappel, présente un ressort.

3. Vanne de direction selon la revendication 2, caractérisée en ce que le ressort est un ressort en forme de C (28).

4. Vanne de direction selon l'une des revendications précédentes, caractérisée en ce que l'élément de réglage est un piston à réaction (20) qui est disposé axialement de façon mobile par rapport à l'arbre d'entrée (11), et axialement et mobile en rotation par rapport au manchon de la vanne (18) et exerce sur le manchon de la vanne (18) un couple de rotation en se rapprochant de celui-ci.

5. Vanne de direction selon la revendication 4, caractérisée en ce que le piston à réaction (20) est en liaison avec le manchon de la vanne (18) au moyen d'une surface de roulement inclinée (21) et de billes (22).

6. Vanne de direction selon l'une des revendications précédentes, caractérisée en ce que l'on dispose une vanne d'arrêt dans le circuit hydraulique.

7. Vanne de direction selon la revendication 6, caractérisée en ce que la vanne d'arrêt (7) est actionnée sur la base d'un signal d'un détecteur de proximité (24), disposé sur la vanne de direction (1) pour le mouvement du piston à réaction (20).

8. Vanne de direction selon la revendication 7, caractérisée en ce que le détecteur de proximité (24) est un détecteur de proximité à induction.
